# EUROPEAN PATENT APPLICATION

(11) **EP 2 922 355 A1**
(43) Date of publication of application: **23.09.2015**
(21) Application number: 12889811.1
(22) Date of filing: 14.12.2012
(51) Int. Cl.: H04W 72/04

(54) **DISCONTINUOUS TRANSMISSION METHOD AND DEVICE BASED ON SCHEDULING**

(71) Applicant: Huawei Technologies Co., Ltd., Longgang District Shenzhen, Guangdong 518129 (CN)
(72) Inventor: HE, Chuanfeng, Shenzhen Guangdong 518129 (CN)
(74) Representative: Pfenning, Meinig & Partner GbR
(86) International application number: PCT/CN2012/086701
(87) International publication number: WO 2014/089841

(57) **Abstract**

The present invention discloses a discontinuous transmission method and apparatus based on scheduling, where the method includes the following steps: acquiring a process that is used for transmitting uplink data and determined according to scheduling; determining a first dedicated physical control channel burst pattern according to the process used for transmitting uplink data; and transmitting a dedicated physical control channel according to the first dedicated physical control channel burst pattern. With the foregoing disclosed content, the technical solutions of the present invention can effectively reduce interference of transmission of a dedicated physical control channel to uplink data.

## Description

### TECHNICAL FIELD

The present invention relates to the field of communications technologies, and in particular, to a discontinuous transmission method and apparatus based on scheduling.

### BACKGROUND

A CPC (Continuous Packet Connectivity, continuous packet connectivity) feature is introduced to a 3GPP (3rd Generation Partnership Project, 3rd Generation Partnership Project) WCDMA (Wideband Code Division Multiple Access, Wideband Code Division Multiple Access) release R7, and the feature includes discontinuous transmission (DTX, Discontinuous Transmission) and discontinuous reception (DRX, Discontinuous Reception). The discontinuous transmission feature defines discontinuous transmission of an uplink DPCCH (Dedicated Physical Control Channel, dedicated physical control channel) of a UE (User Equipment, user equipment); that is, a dedicated physical control channel determines a dedicated physical control channel burst pattern according to a cycle and a burst length that are configured at an upper layer, and performs discontinuous transmission of the dedicated physical control channel according to the physical control channel burst pattern. Therefore, the dedicated physical control channel burst pattern determined according to the cycle and the burst length that are configured at the upper layer is fixed, and may be called a static dedicated physical control channel burst pattern.

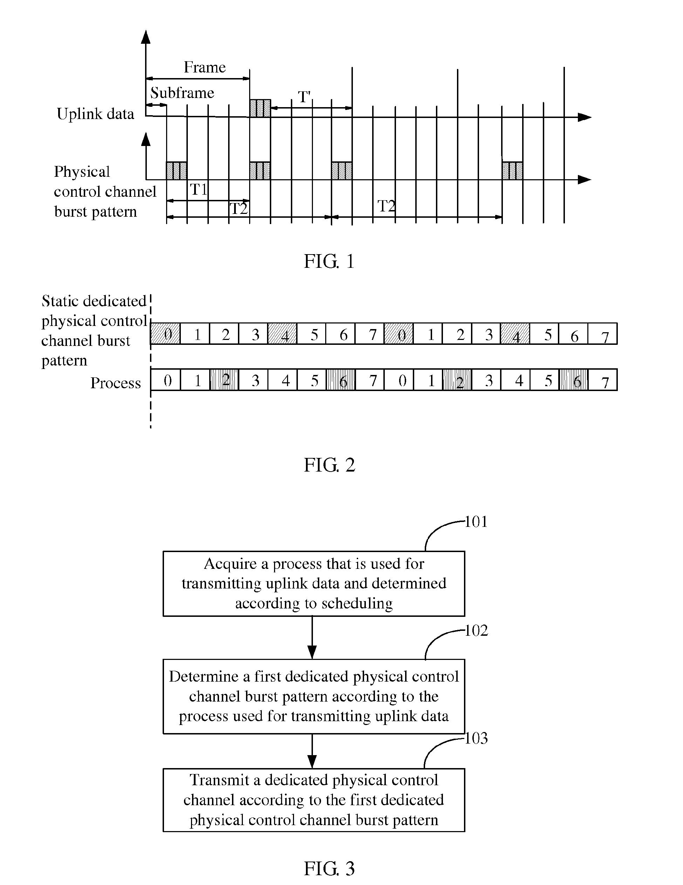

Referring to FIG. 1, FIG. 1 is a sequence diagram of uplink data and a static dedicated physical control channel burst pattern in the prior art. As shown in FIG. 1, a cycle T1 (UE_DTX_cycle_1) of discontinuous transmission of a dedicated physical control channel burst pattern is four subframes, and a cycle T2 (UE_DTX_cycle_2) of discontinuous transmission of a dedicated physical control channel burst pattern is eight subframes, where the cycle T1 and the cycle T2 are configured for a user by a radio network controller at an upper layer. At the beginning, a user equipment performs discontinuous transmission according to a dedicated physical control channel burst pattern determined by the cycle T1 UE_DTX_cycle_1; and if no uplink data is transmitted within a period of time T' (for example, Inactivity_Threshold_for_UE_DTX_cycle_2) configured at the upper layer, a DTX cycle of a static dedicated physical control channel burst pattern is switched from T1 to T2.

In a 3GPP release R12, uplink enhancement (Up Link enhancement) is a possible discussion topic, where uplink TDM (Time-Division Multiple, time division) scheduling is relatively important. TDM scheduling is aligning timing of an uplink 2ms TTI (Transmission Time Interval, transmission time interval) user according to a TTI level, so that a base station may use some time division scheduling methods to improve an uplink capacity. A main method of TDM scheduling is that: transmission of a high-speed user is separated in terms of time by means of scheduling to occupy a process separately, but transmission of multiple low-speed users is scheduled to one process by using a CDM (Code-Division Multiple, code division) method. In this way, mutual interference between a high-speed user and a low-speed user in a same process in a traditional communications mode may be avoided, thereby improving the uplink capacity.

3GPP R7 further specifies that: in discontinuous transmission, a parameter configured at an upper layer is used to perform discontinuous transmission. The parameter configured at the upper layer determines a dedicated physical control channel for transmission of a user equipment, and a static dedicated physical control channel burst pattern only defines a physical control channel burst pattern that the dedicated physical control channel at least needs to transmit when the user equipment is in an activated state of discontinuous transmission; in addition to defined transmission of the physical control channel burst pattern, if there is transmission of another channel (for example, uplink data transmission) other than the dedicated physical control channel in uplink, the dedicated physical control channel also needs to be transmitted normally. Therefore, in the prior art, transmission of a dedicated physical control channel is independent from uplink data transmission.

Referring to FIG. 2, FIG. 2 is a sequence diagram of a static dedicated physical control channel burst pattern and a process in the prior art. As shown in FIG. 2, a frame structure is formed by eight subframes, a burst of a static dedicated physical control channel burst pattern appears in a subframe 0 and a subframe 4 of a first frame, and a subframe 0 and a subframe 4 of a second frame, and a process appears in a subframe 2 and a subframe 6 of the first frame, and a subframe 2 and a subframe 6 of the second frame. It can be learned from FIG. 2 that transmission of a dedicated physical control channel is independent from uplink data transmission.

After TDM scheduling is introduced to 3GPP R12, a base station may determine a transmission process of a user equipment by means of scheduling. Because a transmission time that is of uplink data and determined by scheduling is independent from a transmission time that is of a dedicated physical control channel and determined by a static dedicated physical control channel burst pattern, transmission of a burst of a physical control channel causes interference to transmission of uplink data.

### SUMMARY

A main technical problem to be solved in the present invention is to provide a discontinuous transmission method and apparatus based on scheduling, which can reduce interference of transmission of a dedicated physical control channel to uplink data.

A first aspect provides a discontinuous transmission method based on scheduling, where the method includes: acquiring a process that is used for transmitting uplink data and determined according to scheduling; determining a first dedicated physical control channel burst pattern according to the process used for transmitting uplink data; and transmitting a dedicated physical control channel according to the first dedicated physical control channel burst pattern.

With reference to implementation manners of the first aspect, in a first possible implementation manner, the determining a first dedicated physical control channel burst pattern according to the process used for transmitting uplink data includes: setting a start time of a burst of the first dedicated physical control channel burst pattern to be the same as a start time of a frame or a subframe corresponding to the process used for transmitting uplink data.

With reference to the implementation manners of the first aspect, in a second possible implementation manner, the determining a first dedicated physical control channel burst pattern according to the process used for transmitting uplink data includes: setting a start time of a burst of the first dedicated physical control channel burst pattern to differ by a predetermined offset from a start time of a frame or a subframe corresponding to the process used for transmitting uplink data.

With reference to the implementation manners of the first aspect, in a third possible implementation manner, the determining a first dedicated physical control channel burst pattern according to the process used for transmitting uplink data includes: acquiring configuration information of a second dedicated physical control channel burst pattern from a radio network controller, where the configuration information includes a start time, a burst cycle, and a burst length of the second dedicated physical control channel burst pattern; and if a start time of the process used for transmitting uplink data is between start times of any two adjacent bursts of the second dedicated physical control channel burst pattern, setting a start time of a burst of the first dedicated physical control channel burst pattern to be the same as a start time of a frame or a subframe corresponding to the process used for transmitting uplink data;

With reference to the third possible implementation manner of the implementation manners of the first aspect, in a fourth possible implementation manner, if the start time of the process used for transmitting uplink data is not between the start times of any two adjacent bursts of the second dedicated physical control channel burst pattern, the start time of the burst of the first dedicated physical control channel burst pattern is set to be the same as a start time of the former burst in any two adjacent bursts of the second dedicated physical control channel burst pattern; or if the start time of the process used for transmitting uplink data is not between the start times of any two adjacent bursts of the second dedicated physical control channel burst pattern, the start time of the burst of the first dedicated physical control channel burst pattern is set to be the same as a start time of the latter burst in any two adjacent bursts of the second dedicated physical control channel burst pattern.

With reference to the implementation manners of the first aspect, in a fifth possible implementation manner, the method further includes: acquiring configuration information that is of a second dedicated physical control channel burst pattern and transmitted by a radio network controller, where the configuration information includes a start time, a burst cycle, and a burst length of the second dedicated physical control channel burst pattern; and if no uplink data needs to be transmitted within a predetermined period of time, generating the second dedicated physical control channel burst pattern according to the configuration information, and transmitting the dedicated physical control channel according to the second dedicated physical control channel burst pattern.

A second aspect provides a discontinuous transmission method based on scheduling, where the method includes: acquiring scheduling information transmitted by a base station, and determining, according to the scheduling information, a process used for transmitting uplink data; acquiring configuration information that is of a second dedicated physical control channel burst pattern and transmitted by a radio network controller, where the configuration information includes a start time, a burst cycle, and a burst length of the second dedicated physical control channel burst pattern; acquiring control signaling transmitted by the base station, where the control signaling includes first control signaling and second control signaling; and if the first control signaling is acquired, determining a first dedicated physical control channel burst pattern according to the process used for transmitting uplink data, and transmitting a dedicated physical control channel according to the first dedicated physical control channel burst pattern; or if the second control signaling is acquired, determining the second dedicated physical control channel burst pattern according to the configuration information, and transmitting a dedicated physical control channel according to the second dedicated physical control channel burst pattern.

With reference to implementation manners of the second aspect, in a first possible implementation manner, the determining a first dedicated physical control channel burst pattern according to the process used for transmitting uplink data includes: setting a start time of the first dedicated physical control channel burst pattern to be the same as a start time of a frame or a subframe corresponding to the process used for transmitting uplink data.

With reference to the implementation manners of the second aspect, in a second possible implementation manner, the determining a first dedicated physical control channel burst pattern according to the process used for transmitting uplink data includes: setting a start time of the first dedicated physical control channel burst pattern to differ by a predetermined offset from a start time of a frame or a subframe corresponding to the process used for transmitting uplink data.

With reference to the implementation manners of the second aspect, in a third possible implementation manner, the determining a first dedicated physical control channel burst pattern according to the process used for transmitting uplink data includes: acquiring the configuration information of the second dedicated physical control channel burst pattern from the radio network controller, where the configuration information includes the start time of the second dedicated physical control channel burst pattern; and if a start time of the process used for transmitting uplink data is between start times of any two adjacent bursts of the second dedicated physical control channel burst pattern, setting a start time of a burst of the first dedicated physical control channel burst pattern to be the same as a start time of a frame or a subframe corresponding to the process used for transmitting uplink data.

With reference to the third possible implementation manner of the implementation manners of the second aspect, in a fourth possible implementation manner, if the start time of the process used for transmitting uplink data is not between the start times of any two adjacent bursts of the second dedicated physical control channel burst pattern, the start time of the burst of the first dedicated physical control channel burst pattern is set to be the same as a start time of the former burst in any two adjacent bursts of the second dedicated physical control channel burst pattern; or if the start time of the process used for transmitting uplink data is not between the start times of any two adjacent bursts of the second dedicated physical control channel burst pattern, the start time of the burst of the first dedicated physical control channel burst pattern is set to be the same as a start time of the latter burst in any two adjacent bursts of the second dedicated physical control channel burst pattern.

With reference to the implementation manners of the second aspect, in a fifth possible implementation manner, the method further includes: if no uplink data needs to be transmitted within a predetermined period of time, generating the second dedicated physical control channel burst pattern according to the configuration information, and transmitting the dedicated physical control channel according to the second dedicated physical control channel burst pattern.

A third aspect provides a discontinuous transmission apparatus based on scheduling, where the apparatus includes: a receiving module, configured to acquire a process that is used for transmitting uplink data and determined according to scheduling; a processing module, configured to determine a first dedicated physical control channel burst pattern according to the process used for transmitting uplink data; and a transmitting module, configured to transmit a dedicated physical control channel according to the first dedicated physical control channel burst pattern.

With reference to implementation manners of the third aspect, in a first possible implementation manner, the processing module is configured to: set a start time of the first dedicated physical control channel burst pattern to be the same as a start time of a frame or a subframe corresponding to the process used for transmitting uplink data.

With reference to the implementation manners of the third aspect, in a second possible implementation manner, the processing module is configured to: set a start time of the first dedicated physical control channel burst pattern to differ by a predetermined offset from a start time of a frame or a subframe corresponding to the process used for transmitting uplink data.

With reference to the implementation manners of the third aspect, in a third possible implementation manner, the receiving module is further configured to: acquire configuration information of a second dedicated physical control channel burst pattern from a radio network controller, where the configuration information includes a start time, a burst cycle, and a burst length of the second dedicated physical control channel burst pattern; and the processing module is configured to: determine whether a start time of the process used for transmitting uplink data is between start times of any two adjacent bursts of the second dedicated physical control channel burst pattern, and if yes, set a start time of a burst of the first dedicated physical control channel burst pattern to be the same as a start time of a frame or a subframe corresponding to the process used for transmitting uplink data.

With reference to the third possible implementation manner of the third aspect, in a fourth possible implementation manner, the processing module is further configured to: set the burst of the first dedicated physical control channel burst pattern to be the same as the former burst in any two adjacent bursts of the second dedicated physical control channel burst pattern when determining that the start time of the process used for transmitting uplink data is not between the start times of any two adjacent bursts of the second dedicated physical control channel burst pattern; or set the start time of the burst of the first dedicated physical control channel burst pattern to be the same as a start time of the latter burst in any two adjacent bursts of the second dedicated physical control channel burst pattern when determining that the start time of the process used for transmitting uplink data is not between the start times of any two adjacent bursts of the second dedicated physical control channel burst pattern.

With reference to the implementation manners of the third aspect, in a fifth possible implementation manner, the processing module is configured to determine whether there is uplink data that needs to be transmitted within a predetermined period of time; and when determining that no uplink data needs to be transmitted within the predetermined period of time, generate a second dedicated physical control channel burst pattern according to the configuration information; and the transmitting module is configured to transmit the dedicated physical control channel according to the second dedicated physical control channel burst pattern.

A fourth aspect provides a discontinuous transmission apparatus based on scheduling, where the apparatus includes: a receiving module, configured to acquire scheduling information transmitted by a base station; acquire configuration information that is of a second dedicated physical control channel burst pattern and transmitted by a radio network controller, where the configuration information includes a start time, a burst cycle, and a burst length of the second dedicated physical control channel burst pattern; and acquire control signaling transmitted by the base station, where the control signaling includes first control signaling and second control signaling; a processing module, configured to determine, according to the scheduling information, a process used for transmitting uplink data; when the receiving module acquires the first control signaling, determine a first dedicated physical control channel burst pattern according to the process used for transmitting uplink data; and when the receiving module acquires the second control signaling, determine the second dedicated physical control channel burst pattern according to the configuration information; and a transmitting module, configured to transmit a dedicated physical control channel according to the first dedicated physical control channel burst pattern, or transmit a dedicated physical control channel according to the second dedicated physical control channel burst pattern.

With reference to implementation manners of the fourth aspect, in a first possible implementation manner, the processing module is configured to: set a start time of the first dedicated physical control channel burst pattern to be the same as a start time of a frame or a subframe corresponding to the process used for transmitting uplink data.

With reference to the implementation manners of the fourth aspect, in a second possible implementation manner, the processing module is configured to: set a start time of the first dedicated physical control channel burst pattern to differ by a predetermined offset from a start time of a frame or a subframe corresponding to the process used for transmitting uplink data.

With reference to the implementation manners of the fourth aspect, in a third possible implementation manner, the processing module is configured to: determine whether a start time of the process used for transmitting uplink data is between start times of any two adjacent bursts of the second dedicated physical control channel burst pattern, and if yes, set a start time of a burst of the first dedicated physical control channel burst pattern to be the same as a start time of a frame or a subframe corresponding to the process used for transmitting uplink data.

With reference to the third possible implementation manner of the fourth aspect, in a fourth possible implementation manner, the processing module is configured to: set the start time of the burst of the first dedicated physical control channel burst pattern to be the same as a start time of the former burst in any two adjacent bursts of the second dedicated physical control channel burst pattern when determining that the start time of the process used for transmitting uplink data is not between the start times of any two adjacent bursts of the second dedicated physical control channel burst pattern; or set the start time of the burst of the first dedicated physical control channel burst pattern to be the same as a start time of the latter burst in any two adjacent bursts of the second dedicated physical control channel burst pattern when determining that the start time of the process used for transmitting uplink data is not between the start times of any two adjacent bursts of the second dedicated physical control channel burst pattern.

With reference to the implementation manners of the fourth aspect, in a fifth possible implementation manner, the processing module is configured to: determine whether there is uplink data that needs to be transmitted within a predetermined period of time, and if it is determined that no uplink data needs to be transmitted within the predetermined period of time, generate the second dedicated physical control channel burst pattern according to the configuration information; and the transmitting module is configured to transmit the dedicated physical control channel according to the second dedicated physical control channel burst pattern.

A fifth aspect provides a discontinuous transmission apparatus based on scheduling, where the apparatus includes: a transceiver antenna, a transceiver, and a baseband signal processing chip, where the transceiver antenna is coupled with the transceiver, and the transceiver is coupled with the baseband signal processing chip; the transceiver antenna acquires scheduling information transmitted by a base station; the transceiver acquires the scheduling information from the transceiver antenna; the baseband signal processing chip acquires the scheduling information from the transceiver, determines, according to the scheduling information, a process used for transmitting uplink data, and determines a first dedicated physical control channel burst pattern according to the process; and the baseband signal processing chip controls, according to the first dedicated physical control channel burst pattern, the transceiver and the transceiver antenna to transmit a dedicated physical control channel.

With reference to implementation manners of the fifth aspect, in a first possible implementation manner, the baseband signal processing chip is configured to: set a start time of the first dedicated physical control channel burst pattern to be the same as a start time of a frame or a subframe corresponding to the process used for transmitting uplink data.

With reference to the implementation manners of the fifth aspect, in a second possible implementation manner, the baseband signal processing chip is configured to: set a start time of the first dedicated physical control channel burst pattern to differ by a predetermined offset from a start time of a frame or a subframe corresponding to the process used for transmitting uplink data.

With reference to the implementation manners of the fifth aspect, in a third possible implementation manner, the transceiver antenna further acquires configuration information of a second dedicated physical control channel burst pattern from a radio network controller, where the configuration information includes a start time, a burst cycle, and a burst length of the second dedicated physical control channel burst pattern; and the transceiver module acquires the configuration information from the transceiver antenna; and the baseband signal processing chip acquires the configuration information from the transceiver, and determines whether a start time of the process used for transmitting uplink data is between start times of any two adjacent bursts of the second dedicated physical control channel burst pattern, and if yes, sets a start time of a burst of the first dedicated physical control channel burst pattern to be the same as a start time of a frame or a subframe corresponding to the process used for transmitting uplink data.

With reference to the third possible implementation manner of the fifth aspect, in a fourth possible implementation manner, the baseband signal processing chip further sets the burst of the first dedicated physical control channel burst pattern to be the same as the former burst in any two adjacent bursts of the second dedicated physical control channel burst pattern when determining that the start time of the process used for transmitting uplink data is not between the start times of any two adjacent bursts of the second dedicated physical control channel burst pattern; or sets the start time of the burst of the first dedicated physical control channel burst pattern to be the same as a start time of the latter burst in any two adjacent bursts of the second dedicated physical control channel burst pattern when determining that the start time of the process used for transmitting uplink data is not between the start times of any two adjacent bursts of the second dedicated physical control channel burst pattern.

With reference to the implementation manners of the fifth aspect, in a fifth possible implementation manner, the baseband signal processing chip determines whether there is uplink data that needs to be transmitted within a predetermined period of time; and when determining that no uplink data needs to be transmitted within the predetermined period of time, generates a second dedicated physical control channel burst pattern according to the configuration information; and controls, according to the second dedicated physical control channel burst pattern, the transceiver and the transceiver antenna to transmit the dedicated physical control channel.

A sixth aspect provides a discontinuous transmission apparatus based on scheduling, where the apparatus includes: a transceiver antenna, a transceiver, and a baseband signal processing chip, where the transceiver antenna is coupled with the transceiver, and the transceiver is coupled with the baseband signal processing chip; the transceiver antenna acquires scheduling information transmitted by a base station; acquires configuration information that is of a second dedicated physical control channel burst pattern and transmitted by a radio network controller, where the configuration information includes a start time, a burst cycle, and a burst length of the second dedicated physical control channel burst pattern; acquires control signaling transmitted by the base station, where the control signaling includes first control signaling and second control signaling; the transceiver acquires the scheduling information, the configuration information, and the control signaling from the transceiver antenna; the baseband signal processing chip acquires the scheduling information, the configuration information, and the control signaling from the transceiver; determines, according to the scheduling information, a process used for transmitting uplink data; when acquiring the first control signaling, determines a first dedicated physical control channel burst pattern according to the process used for transmitting uplink data; when acquiring the second control signaling, determines the second dedicated physical control channel burst pattern according to the configuration information; and the baseband signal processing chip controls, according to the first dedicated physical control channel burst pattern, the transceiver and the transceiver antenna to transmit a dedicated physical control channel; or controls, according to the second dedicated physical control channel burst pattern, the transceiver and the transceiver antenna to transmit a dedicated physical control channel.

With reference to implementation manners of the sixth aspect, in a first possible implementation manner, the baseband signal processing chip is configured to: set a start time of the first dedicated physical control channel burst pattern to be the same as a start time of a frame or a subframe corresponding to the process used for transmitting uplink data.

With reference to the implementation manners of the sixth aspect, in a second possible implementation manner, the baseband signal processing chip is configured to: set a start time of the first dedicated physical control channel burst pattern to differ by a predetermined offset from a start time of a frame or a subframe corresponding to the process used for transmitting uplink data.

With reference to the implementation manners of the sixth aspect, in a third possible implementation manner, the baseband signal processing chip is configured to: determine whether a start time of the process used for transmitting uplink data is between start times of any two adjacent bursts of the second dedicated physical control channel burst pattern, and if yes, set a start time of a burst of the first dedicated physical control channel burst pattern to be the same as a start time of a frame or a subframe corresponding to the process used for transmitting uplink data.

With reference to the third possible implementation manner of the sixth aspect, in a fourth possible implementation manner, the baseband signal processing chip sets the start time of the burst of the first dedicated physical control channel burst pattern to be the same as a start time of the former burst in any two adjacent bursts of the second dedicated physical control channel burst pattern when determining that the start time of the process used for transmitting uplink data is not between the start times of any two adjacent bursts of the second dedicated physical control channel burst pattern; or sets the start time of the burst of the first dedicated physical control channel burst pattern to be the same as a start time of the latter burst in any two adjacent bursts of the second dedicated physical control channel burst pattern when determining that the start time of the process used for transmitting uplink data is not between the start times of any two adjacent bursts of the second dedicated physical control channel burst pattern.

With reference to the implementation manners of the sixth aspect, in a fifth possible implementation manner, the baseband signal processing chip is configured to: determine whether there is uplink data that needs to be transmitted within a predetermined period of time, and if it is determined that no uplink data needs to be transmitted within the predetermined period of time, generate the second dedicated physical control channel burst pattern according to the configuration information; and
control, according to the second dedicated physical control channel burst pattern, the transceiver and the transceiver antenna to transmit the dedicated physical control channel.

Different from a case in the prior art, in the discontinuous transmission method and apparatus based on scheduling according to the embodiments of the present invention, a first dedicated physical control channel burst pattern is determined according to a process, and a dedicated physical control channel is transmitted according to the first dedicated physical control channel burst pattern. Because transmission of the dedicated physical control channel correlates with transmission of uplink data when the dedicated physical control channel is transmitted, interference of the transmission of the dedicated physical control channel to the uplink data may be effectively reduced.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a sequence diagram of uplink data and a second dedicated physical control channel burst pattern in the prior art;
FIG. 2 is a sequence diagram of a second dedicated physical control channel burst pattern and a process in the prior art;
FIG. 3 is a flowchart of a discontinuous transmission method based on scheduling according to a first embodiment of the present invention;
FIG. 4 is a flowchart of a discontinuous transmission method based on scheduling according to a second embodiment of the present invention;
FIG. 5 is a sequence diagram of frame formats of a first dedicated physical control channel burst pattern, a second dedicated physical control channel burst pattern, and a process according to the second embodiment of the present invention;
FIG. 6 is a flowchart of a discontinuous transmission method based on scheduling according to a third embodiment of the present invention;
FIG. 7 is a sequence diagram of a second dedicated physical control channel burst pattern, a process, and a first dedicated physical control channel burst pattern according to the third embodiment of the present invention;
FIG. 8 is a flowchart of a discontinuous transmission method based on scheduling according to a fourth embodiment of the present invention;
FIG. 9 is a sequence diagram of a second dedicated physical control channel burst pattern, a process, and a first dedicated physical control channel burst pattern according to the fourth embodiment of the present invention;
FIG. 10 is a schematic diagram of a system structure of a discontinuous transmission apparatus based on scheduling according to a fifth embodiment of the present invention;
FIG. 11 is a flowchart of a discontinuous transmission method based on scheduling according to a sixth embodiment of the present invention;
FIG. 12 is a flowchart of a discontinuous transmission method based on scheduling according to a seventh embodiment of the present invention;
FIG. 13 is a schematic diagram of a system structure of a discontinuous transmission apparatus based on scheduling according to an eighth embodiment of the present invention; and
FIG. 14 is a schematic diagram of a hardware structure of a discontinuous transmission apparatus based on scheduling according to a ninth embodiment of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be noted that, in the embodiments of the present invention, a static physical control channel burst pattern described in the prior art is called a second dedicated physical control channel burst pattern, so as to be distinguished from a first dedicated physical control channel burst pattern proposed in the present invention: in the present invention, a first dedicated physical control channel burst pattern is determined according to a process used for transmitting uplink data; because the process used for transmitting uplink data changes dynamically, the first dedicated physical control channel burst pattern also changes dynamically, where a burst is marked on a specific subframe of the first dedicated physical control channel burst pattern and the second dedicated physical control channel burst pattern in frame timing, so as to give a prompt for transmission of a dedicated physical control channel in duration of the subframe.

At first, referring to FIG. 3, FIG. 3 is a flowchart of a discontinuous transmission method based on scheduling according to a first embodiment of the present invention. As shown in FIG. 3, the discontinuous transmission method based on scheduling in the present invention includes the following steps:
Step 101: Acquire a process that is used for transmitting uplink data and determined according to scheduling. In this step, the process that is used for transmitting uplink data and determined according to scheduling may be specifically acquired from a base station. The process used for transmitting uplink data is an activated process, and may be acquired by means of scheduling information.
Step 102: Determine a first dedicated physical control channel burst pattern according to the process used for transmitting uplink data.
Step 103: Transmit a dedicated physical control channel according to the first dedicated physical control channel burst pattern. In this step, the dedicated physical control channel may be specifically transmitted to the base station.

In this embodiment, transmission of a dedicated physical control channel is determined by a process used for transmitting uplink data, and therefore, when the dedicated physical control channel is transmitted, the transmission of the dedicated physical control channel correlates with transmission of the uplink data, which may greatly reduce interference of the transmission of the dedicated physical control channel to the uplink data.

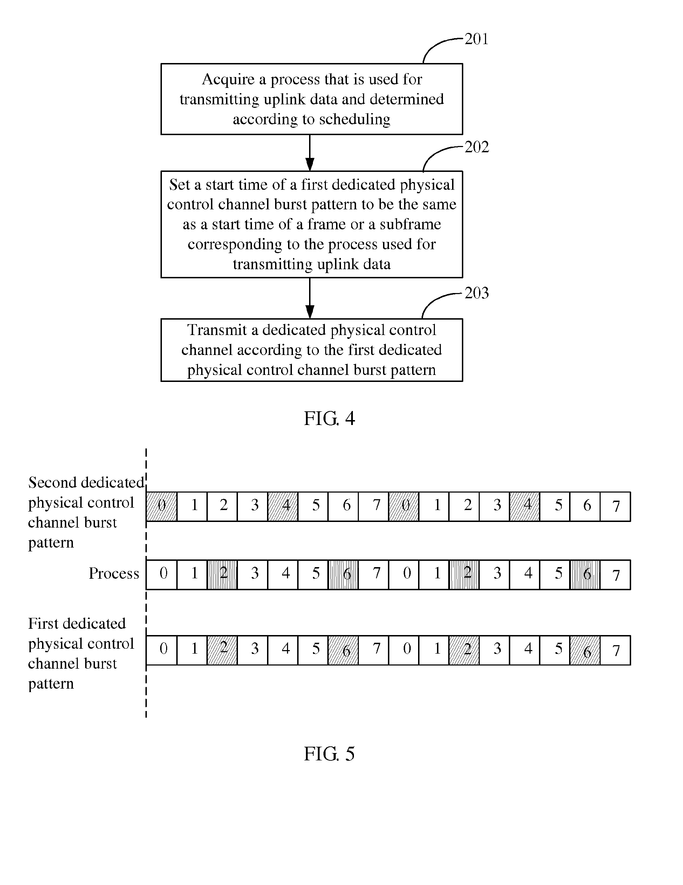

Referring to FIG. 4, FIG. 4 is a flowchart of a discontinuous transmission method based on scheduling according to a second embodiment of the present invention. As shown in FIG. 4, the discontinuous transmission method based on scheduling in the present invention includes the following steps:
Step 201: Acquire a process that is used for transmitting uplink data and determined according to scheduling. In this step, the process that is used for transmitting uplink data and determined according to scheduling may be specifically acquired from a base station. The process used for transmitting uplink data is an activated process, and may be acquired by means of scheduling information.
Step 202: Set a start time of a first dedicated physical control channel burst pattern to be the same as a start time of a frame or a subframe corresponding to the process used for transmitting uplink data.
Step 203: Transmit a dedicated physical control channel according to the first dedicated physical control channel burst pattern. In this step, the dedicated physical control channel may be specifically transmitted to the base station.

Referring to FIG. 5, FIG. 5 is a sequence diagram of frame formats of the first dedicated physical control channel burst pattern, a second dedicated physical control channel burst pattern, and the process that are involved in the second embodiment of the present invention. The second dedicated physical control channel burst pattern is determined by configuration information that is of the second dedicated physical control channel burst pattern and transmitted by a radio network controller. In the present invention, the second dedicated physical control channel burst pattern is not used, and instead, the first dedicated physical control channel burst pattern is generated according to the process used for transmitting uplink data. Specifically, the start time of the first dedicated physical control channel burst pattern is set to be the same as the start time of the frame or the subframe corresponding to the process used for transmitting uplink data, and the dedicated physical control channel is transmitted according to the first dedicated physical control channel burst pattern.

For details, reference may be made to FIG. 5. In an instance shown in FIG. 5, one frame structure of the second dedicated physical control channel burst pattern, the process, and the first dedicated physical control channel burst pattern includes eight subframes, where the second dedicated physical control channel burst is transmitted in a subframe 0 and a subframe 4, and the process is transmitted in a subframe 2 and a subframe 6 of a first frame, and a subframe 2 and a subframe 6 of a second frame. In this embodiment, the start time of the first dedicated physical control channel burst pattern is set to be the same as the start time of the frame or the subframe corresponding to the process. Therefore, a burst of the first dedicated physical control channel burst pattern is set in the subframe 2 and the subframe 6 of the first frame, and the subframe 2 and the subframe 6 of the second frame, so that the dedicated physical control channel is transmitted in the subframe 2 and the subframe 6 of the first frame, and the subframe 2 and the subframe 6 of the second frame.

A start time of the dedicated physical control channel is set to be consistent with the start time of the process used for transmitting uplink data, and therefore, interference of the dedicated physical control channel to the uplink data may be effectively reduced when the dedicated physical control channel is transmitted.

It should be noted that, in this embodiment, the configuration information that is of the second dedicated physical control channel burst pattern and transmitted by the radio network controller may further be acquired, where the configuration information includes a start time, a burst cycle, and a burst length of the second dedicated physical control channel burst pattern; it is determined whether there is uplink data that needs to be transmitted within a predetermined period of time, and if it is determined that no uplink data needs to be transmitted within the predetermined period of time, the second dedicated physical control channel burst pattern is generated according to the configuration information, and the dedicated physical control channel is transmitted according to the second dedicated physical control channel burst pattern. By setting this mechanism, it can be ensured that when no process needs to be transmitted, the dedicated physical control channel is transmitted according to the second dedicated physical control channel burst pattern, thereby ensuring that the dedicated physical control channel may still be transmitted when no process is transmitted.

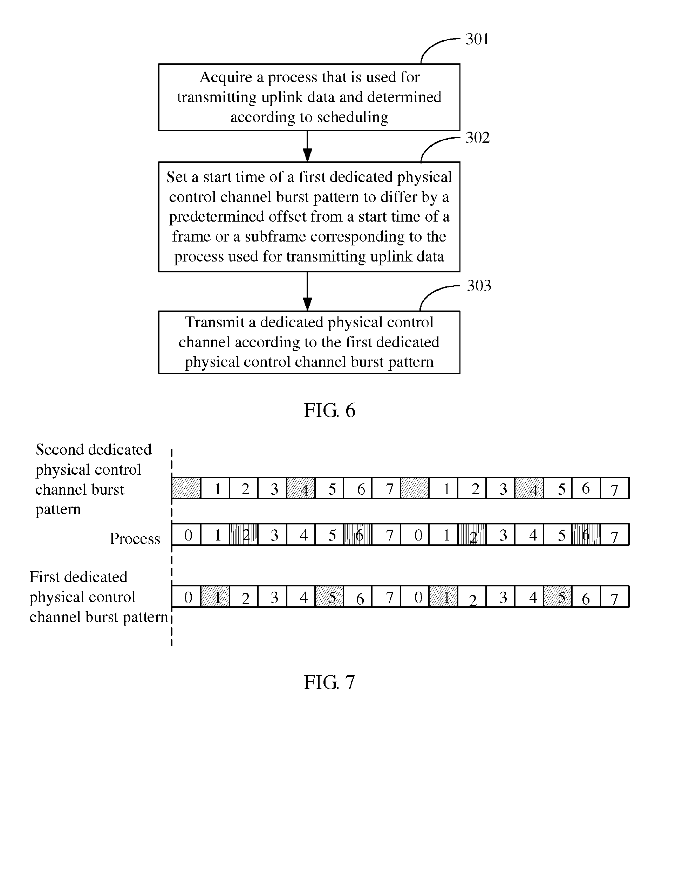

FIG. 6 is a flowchart of a discontinuous transmission method based on scheduling according to a third embodiment of the present invention. As shown in FIG. 6, the discontinuous transmission method based on scheduling in the present invention includes the following steps:
Step 301: Acquire a process that is used for transmitting uplink data and determined according to scheduling. In this step, the process that is used for transmitting uplink data and determined according to scheduling may be specifically acquired from a base station.
Step 302: Set a start time of a first dedicated physical control channel burst pattern to differ by a predetermined offset from a start time of a frame or a subframe corresponding to the process used for transmitting uplink data. The predetermined offset is a specific period of time, and optionally, is a cycle of one or more subframes.
Step 303: Transmit a dedicated physical control channel according to the first dedicated physical control channel burst pattern. In this step, the dedicated physical control channel may be specifically transmitted to the base station.

Referring to FIG. 7, FIG. 7 is a sequence diagram of a second dedicated physical control channel burst pattern, the process, and the first dedicated physical control channel burst pattern according to the third embodiment of the present invention. The second dedicated physical control channel burst pattern is determined by configuration information that is of the second dedicated physical control channel burst pattern and transmitted by a radio network controller. In the present invention, the second dedicated physical control channel burst pattern is not used, and instead, the first dedicated physical control channel burst pattern is generated according to the process used for transmitting uplink data. The start time of the first dedicated physical control channel burst pattern is set to differ by the predetermined offset from the start time of the frame or the subframe corresponding to the process used for transmitting uplink data, and the dedicated physical control channel is transmitted according to the first dedicated physical control channel burst pattern.

In an instance shown in FIG. 7, one frame structure of the second dedicated physical control channel burst pattern, the process, and the first dedicated physical control channel burst pattern includes eight subframes, where the second dedicated physical control channel burst is transmitted in a subframe 0 and a subframe 4, and the process is transmitted in a subframe 2 and a subframe 6 of a first frame, and a subframe 2 and a subframe 6 of a second frame. Because the start time of the first dedicated physical control channel burst pattern is set to differ by the predetermined offset (the predetermined offset is set to an advance time of one subframe cycle in the instance shown in FIG. 7) from the start time of the frame or the subframe corresponding to the process. Therefore, a burst of the first dedicated physical control channel burst pattern is set in a subframe 1 and a subframe 5 of the first frame and a subframe 1 and a subframe 5 of the second frame, so that the dedicated physical control channel is transmitted in the subframe 1 and the subframe 5 of the first frame and the subframe 1 and the subframe 5 of the second frame.

The start time of the first dedicated physical control channel burst pattern is set to differ by the predetermined offset from the start time of the frame or the subframe corresponding to the process used for transmitting uplink data. Therefore, there is a specific correlation between the transmission of the dedicated physical control channel and the transmission of the uplink data, so that interference of the dedicated physical control channel to the uplink data can be reduced when the dedicated physical control channel and the uplink data are transmitted.

Similar to the previous embodiment, in this embodiment, the configuration information that is of the second dedicated physical control channel burst pattern and transmitted by the radio network controller may further be acquired, where the configuration information includes a start time, a burst cycle, and a burst length of the second dedicated physical control channel burst pattern; it is determined whether there is uplink data that needs to be transmitted within a predetermined period of time, and if it is determined that no uplink data needs to be transmitted within the predetermined period of time, the second dedicated physical control channel burst pattern is generated according to the configuration information, and the dedicated physical control channel is transmitted according to the second dedicated physical control channel burst pattern. By setting this mechanism, it can be ensured that when no process needs to be transmitted, the dedicated physical control channel is transmitted according to the second dedicated physical control channel burst pattern, thereby ensuring that the dedicated physical control channel may still be transmitted when no process is transmitted.

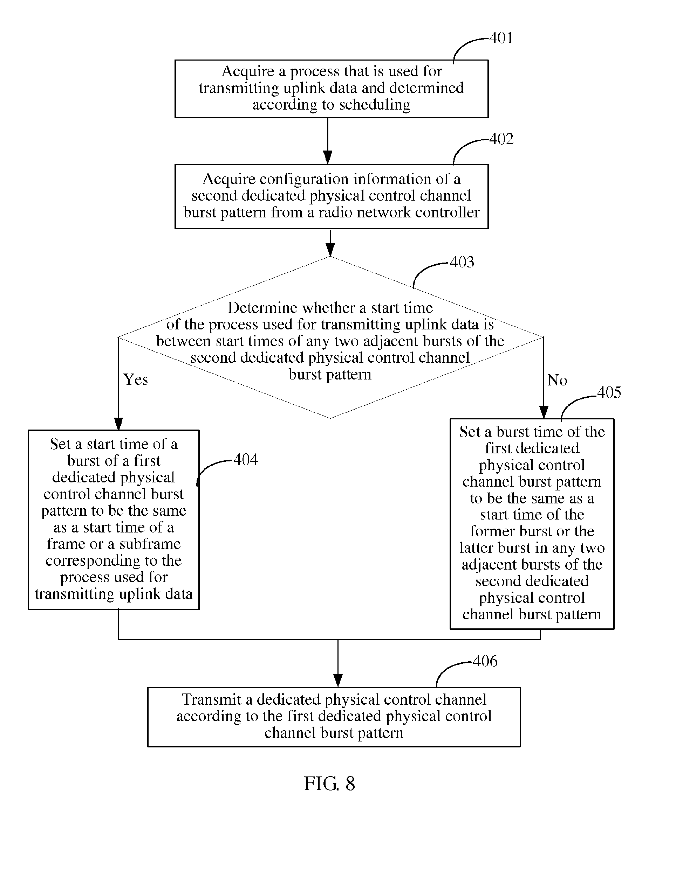

FIG. 8 is a flowchart of a discontinuous transmission method based on scheduling according to a fourth embodiment of the present invention. As shown in FIG. 8, the discontinuous transmission method based on scheduling in the present invention includes the following steps:
Step 401: Acquire a process that is used for transmitting uplink data and determined according to scheduling. In this step, the process that is used for transmitting uplink data and determined according to scheduling may be specifically acquired from a base station.
Step 402: Acquire configuration information of a second dedicated physical control channel burst pattern from a radio network controller, where the configuration information includes a start time, a burst cycle, and a burst length of the second dedicated physical control channel burst pattern.
Step 403: Determine whether a start time of the process used for transmitting uplink data is between start times of any two adjacent bursts of the second dedicated physical control channel burst pattern. If yes, perform step 404, and if not, perform step 405.
Step 404: Set a start time of a burst of a first dedicated physical control channel burst pattern to be the same as a start time of a frame or a subframe corresponding to the process used for transmitting uplink data.
Step 405: Set the start time of the burst of the first dedicated physical control channel burst pattern to be the same as a start time of the former burst or the latter burst in any two adjacent bursts of the second dedicated physical control channel burst pattern.
Step 406: Transmit a dedicated physical control channel according to the first dedicated physical control channel burst pattern.

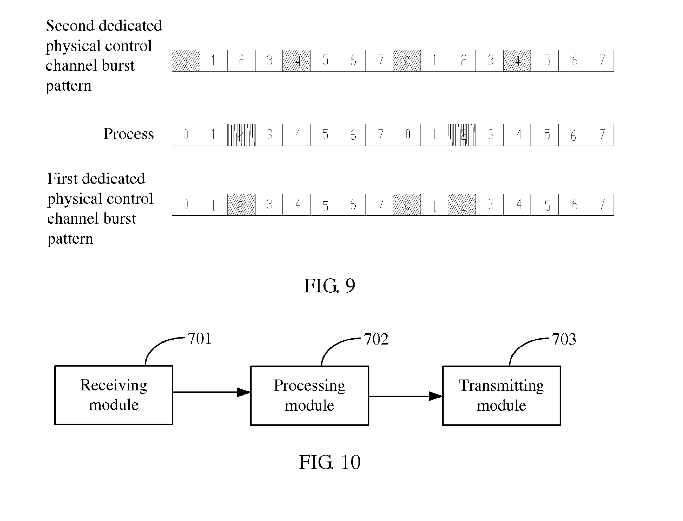

The following description is made with reference to FIG. 9. FIG. 9 is a sequence diagram of the second dedicated physical control channel burst pattern, the process, and the first dedicated physical control channel burst pattern according to the fourth embodiment of the present invention. As shown in FIG. 9, a frame structure of the second dedicated physical control channel burst pattern includes eight subframes. In the second dedicated physical control channel burst pattern, a burst appears in a subframe 0 and a subframe 4 of each frame. The process that is used for transmitting uplink data and scheduled by the base station is transmitted in a subframe 2 and a subframe 6.

Therefore, in this embodiment, it is determined whether the start time of the process used for transmitting uplink data is between the start times of any two adjacent bursts of the second dedicated physical control channel burst pattern. Specifically, the start time of the process is compared with a start time of a burst of the second dedicated physical control channel burst pattern. For example, it is determined whether a process needs to be transmitted within a period of time between a start time point of a subframe 0 and a start time point of a subframe 4 in a first frame of the second dedicated physical control channel burst pattern. As shown in FIG. 9, the process is transmitted in a subframe 2 of the first frame; therefore, the start time of the process is between the start time point of the subframe 0 and the start time point of the subframe 4 in the first frame, and a result of the determining is "yes". In this case, the start time of the burst of the first dedicated physical control channel burst pattern is set to be the same as the start time of the frame or the subframe corresponding to the process used for transmitting uplink data, that is, the burst of the first dedicated physical control channel burst pattern is set in the subframe 2.

Then, it continues to be determined whether a process needs to be transmitted within a period of time between the start time point of the subframe 4 in the first frame and a start time point of a subframe 0 in a second frame of the second dedicated physical control channel burst pattern. As shown in FIG. 9, no process is transmitted within the period of time, and the start time of the burst of the first dedicated physical control channel burst pattern is set to be the same as the start time point of the subframe 0 in the second frame (in an alternative embodiment, the start time of the burst of the first dedicated physical control channel burst pattern may also be set to be the same as the start time point of the subframe 4 in the first frame).

In this embodiment, an added determining process may ensure that the duration of transmission of the dedicated physical control channel is not greater than the burst cycle of the second dedicated physical control channel burst pattern. In addition, there is a specific correlation between the transmission of the dedicated physical control channel and the transmission of the uplink data, so that interference of the dedicated physical control channel to the uplink data can be greatly reduced when the dedicated physical control channel and the uplink data are transmitted.

Similar to the previous embodiment, in this embodiment, the configuration information that is of the second dedicated physical control channel burst pattern and transmitted by the radio network controller may further be acquired, where the configuration information includes a start time, a burst cycle, and a burst length of the second dedicated physical control channel burst pattern; it is determined whether there is uplink data that needs to be transmitted within a predetermined period of time, and if it is determined that no uplink data needs to be transmitted within the predetermined period of time, the second dedicated physical control channel burst pattern is generated according to the configuration information, and the dedicated physical control channel is transmitted according to the second dedicated physical control channel burst pattern. By setting this mechanism, it can be ensured that when no process needs to be transmitted, the dedicated physical control channel is transmitted according to the second dedicated physical control channel burst pattern, thereby ensuring that the dedicated physical control channel may still be transmitted when no process is transmitted.

Referring to FIG. 10, FIG. 10 is a schematic diagram of a system structure of a discontinuous transmission apparatus based on scheduling according to a fifth embodiment of the present invention. The discontinuous transmission apparatus based on scheduling is configured to perform discontinuous transmission methods based on scheduling in the foregoing embodiments. As shown in FIG. 10, the discontinuous transmission apparatus based on scheduling in the present invention includes a receiving module 701, a processing module 702, and a transmitting module 703, where the receiving module 701 is configured to acquire a process that is used for transmitting uplink data and determined according to scheduling, the processing module 702 is configured to determine a first dedicated physical control channel burst pattern according to the process used for transmitting uplink data, and the transmitting module 703 is configured to transmit a dedicated physical control channel according to the first dedicated physical control channel burst pattern.

That the processing module 702 determines the first dedicated physical control channel burst pattern according to the process used for transmitting uplink data may be implemented in the following implementation manners:
Manner 1: The processing module 702 sets a start time of the first dedicated physical control channel burst pattern to be the same as a start time of a frame or a subframe corresponding to the process used for transmitting uplink data.
Manner 2: The processing module 702 sets a start time of the first dedicated physical control channel burst pattern to differ by a predetermined offset from a start time of a frame or a subframe corresponding to the process used for transmitting uplink data.
Manner 3: The receiving module 701 acquires configuration information of a second dedicated physical control channel burst pattern from a radio network controller, where the configuration information includes a start time, a burst cycle, and a burst length of the second dedicated physical control channel burst pattern; and the processing module 702 determines whether a start time of the process used for transmitting uplink data is between start times of any two adjacent bursts of the second dedicated physical control channel burst pattern, and if yes, sets a start time of a burst of the first dedicated physical control channel burst pattern to be the same as a start time of a frame or a subframe corresponding to the process used for transmitting uplink data; and when determining that the start time of the process used for transmitting uplink data is not between the start times of any two adjacent bursts of the second dedicated physical control channel burst pattern, sets the burst of the first dedicated physical control channel burst pattern to be the same as the former burst in any two adjacent bursts of the second dedicated physical control channel burst pattern; or when determining that the start time of the process used for transmitting uplink data is not between the start times of any two adjacent bursts of the second dedicated physical control channel burst pattern, sets the start time of the burst of the first dedicated physical control channel burst pattern to be the same as a start time of the latter burst in any two adjacent bursts of the second dedicated physical control channel burst pattern.

In addition, the processing module 702 may further determine whether there is uplink data that needs to be transmitted within a predetermined period of time; and when determining that no uplink data needs to be transmitted within the predetermined period of time, generate the second dedicated physical control channel burst pattern according to the configuration information. In this case, the transmitting module 703 is configured to transmit the dedicated physical control channel according to the second dedicated physical control channel burst pattern.

It should be noted that, the discontinuous transmission apparatus based on scheduling in the present invention may be specifically a user equipment, and specifically, may be a mobile communications terminal such as a mobile phone.

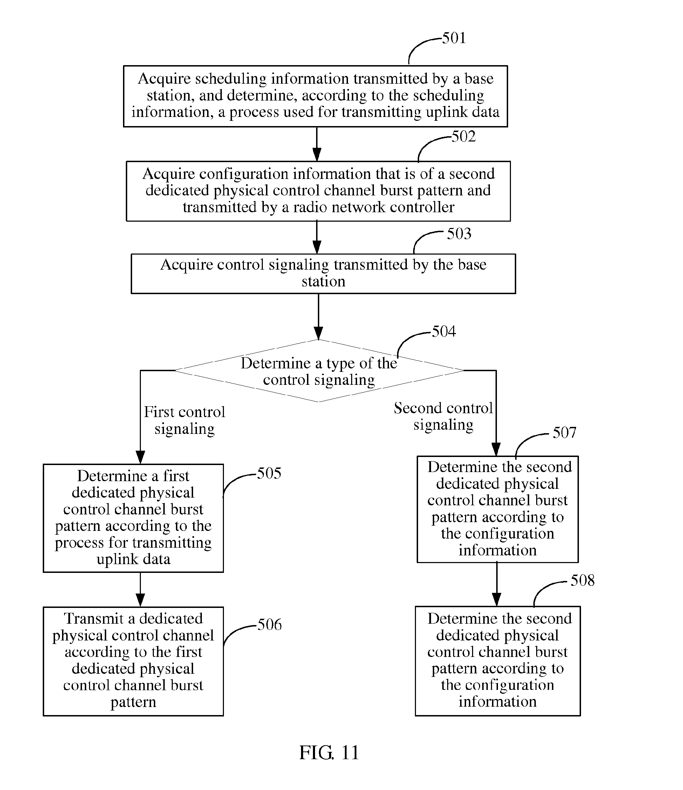

Further referring to FIG. 11, FIG. 11 is a flowchart of a discontinuous transmission method based on scheduling according to a sixth embodiment of the present invention. As shown in FIG. 11, the discontinuous transmission method based on scheduling in the present invention includes the following steps:
Step 501: Acquire scheduling information transmitted by a base station, and determine, according to the scheduling information, a process used for transmitting uplink data.
Step 502: Acquire configuration information that is of a second dedicated physical control channel burst pattern and transmitted by a radio network controller, where the configuration information includes a start time, a burst cycle, and a burst length of the second dedicated physical control channel burst pattern.
Step 503: Acquire control signaling transmitted by the base station, where the control signaling includes first control signaling and second control signaling. For example, the first control signaling and the second control signaling may be set to simple binary numbers; for instance, it is assumed that the first control signaling is a binary number 0, and the second control signaling is a binary number 1. There is no sequence for performing the foregoing steps 501, 502, and 503, and an execution sequence may be determined according to an actual requirement.
Step 504: Determine a type of the control signaling; when the first control signaling is acquired, perform step 505, and when the second control signaling is acquired, perform step 507. According to the foregoing example, when it is determined that the acquired control signaling is the binary number 0, that is, the first control signaling is acquired, perform step 505; when it is determined that the acquired control signaling is the binary number 1, that is, the second control signaling is acquired, perform step 507.
Step 505: Determine a first dedicated physical control channel burst pattern according to the process for transmitting uplink data.
Step 506: Transmit a dedicated physical control channel according to the first dedicated physical control channel burst pattern.
Step 507: Determine the second dedicated physical control channel burst pattern according to the configuration information. In this step, because the configuration information includes the start time, the burst cycle, and the burst length of the second dedicated physical control channel burst pattern, the second dedicated physical control channel burst pattern is determined according to the start time, the burst cycle, and the burst length.
Step 508: Transmit a dedicated physical control channel according to the second dedicated physical control channel burst pattern.

In this embodiment, the control signaling of the base station is acquired by performing step 503, and the type of the control signaling is determined in step 504; the second dedicated physical control channel burst pattern and the first dedicated physical control channel burst pattern are generated according to different types, so that under control of the base station, switching may be performed between two modes: transmitting the dedicated physical control channel according to the first dedicated physical control channel burst pattern, and transmitting the dedicated physical control channel according to the second dedicated physical control channel burst pattern. When it is switched to the mode of transmitting the dedicated physical control channel according to the first dedicated physical control channel burst pattern, there is a specific correlation between the transmission of the dedicated physical control channel and the transmission of the uplink data, so that interference of the dedicated physical control channel to the uplink data can be greatly reduced when the dedicated physical control channel and the uplink data are transmitted.

It should be noted that, in the foregoing step 506, transmitting the dedicated physical control channel according to the first dedicated physical control channel burst pattern may be specifically: setting a start time of the first dedicated physical control channel burst pattern to be the same as a start time of a frame or a subframe corresponding to the process used for transmitting uplink data; or setting a start time of the first dedicated physical control channel burst pattern to differ by a predetermined offset from a start time of a frame or a subframe corresponding to the process used for transmitting uplink data. The foregoing two specific implementation manners are described in detail in FIG. 5, FIG. 7, and corresponding description of FIG. 5 and FIG. 7, and details are not described herein again.

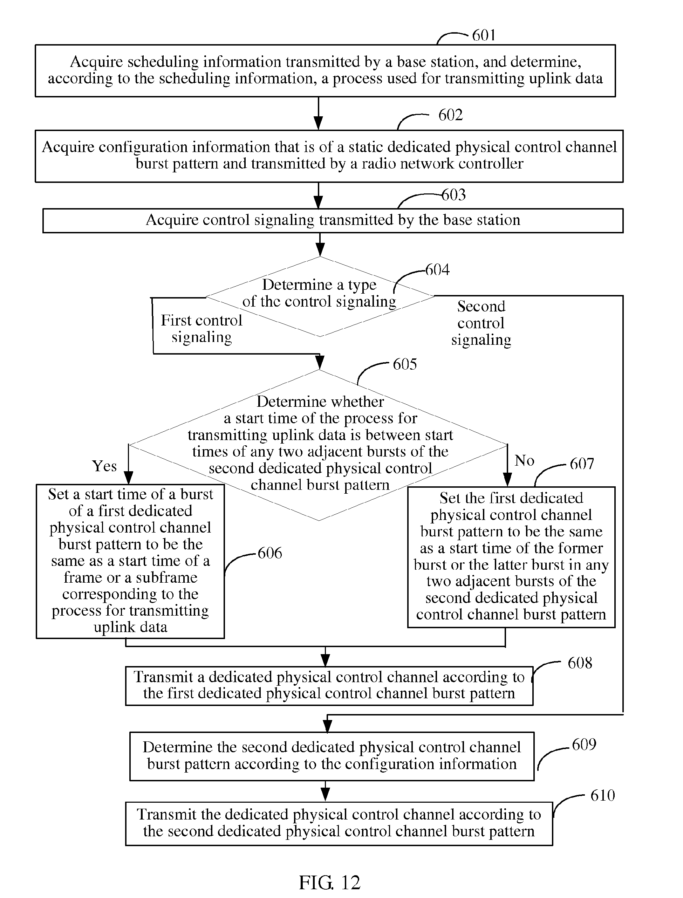

Further referring to FIG. 12, FIG. 12 is a flowchart of a discontinuous transmission method based on scheduling according to a seventh embodiment of the present invention. As shown in FIG. 12, the discontinuous transmission method based on scheduling in the present invention includes the following steps:
Step 601: Acquire scheduling information transmitted by a base station, and determine, according to the scheduling information, a process used for transmitting uplink data.
Step 602: Acquire configuration information that is of a second dedicated physical control channel burst pattern and transmitted by a radio network controller.
Step 603: Acquire control signaling transmitted by the base station. There is no sequence for performing the steps 601, 602, and 603, and an execution sequence may be determined according to an actual requirement.
Step 604: Determine a type of the control signaling; when first control signaling is acquired, perform step 605, and when second control signaling is acquired, perform step 609.
Step 605: Determine whether a start time of the process for transmitting uplink data is between start times of any two adjacent bursts of the second dedicated physical control channel burst pattern.
Step 606: Set a start time of a burst of a first dedicated physical control channel burst pattern to be the same as a start time of a frame or a subframe corresponding to the process for transmitting uplink data.
Step 607: Set the start time of the first dedicated physical control channel burst pattern to be the same as a start time of the former burst or the latter burst in any two adjacent bursts of the second dedicated physical control channel burst pattern.
Step 608: Transmit a dedicated physical control channel according to the first dedicated physical control channel burst pattern.
Step 609: Determine the second dedicated physical control channel burst pattern according to the configuration information.
Step 610: Transmit a dedicated physical control channel according to the second dedicated physical control channel burst pattern.

In this embodiment, the control signaling of the base station is acquired by performing step 603, and the type of the control signaling is determined in step 604; the second dedicated physical control channel burst pattern and the first dedicated physical control channel burst pattern are generated according to different types, so that under control of the base station, switching may be performed between two modes: transmitting the dedicated physical control channel according to the first dedicated physical control channel burst pattern, and transmitting the dedicated physical control channel according to the second dedicated physical control channel burst pattern. When it is switched to the mode of transmitting the dedicated physical control channel according to the first dedicated physical control channel burst pattern, there is a specific correlation between transmission of the dedicated physical control channel and the transmission of the uplink data, so that interference of the dedicated physical control channel to the uplink data can be greatly reduced when the dedicated physical control channel and the uplink data are transmitted.

In addition, with reference to FIG. 9 and corresponding description of FIG. 9, it can be learned that a determining step in step 607 may ensure that the duration of the transmission of the dedicated physical control channel is at least not greater than the burst cycle of a second physical control channel burst pattern.

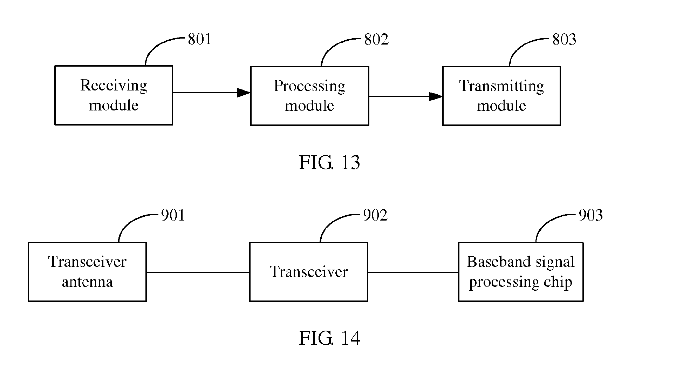

Referring to FIG. 13, FIG. 13 is a schematic diagram of a system structure of a discontinuous transmission apparatus based on scheduling according to an eighth embodiment of the present invention. As shown in FIG. 10, the discontinuous transmission apparatus based on scheduling in the present invention is configured to perform discontinuous transmission methods based on scheduling in the foregoing embodiments. The discontinuous transmission apparatus based on scheduling includes a receiving module 801, a processing module 802, and a transmitting module 803.

The receiving module 801 is configured to acquire scheduling information transmitted by a base station; acquire configuration information that is of a second dedicated physical control channel burst pattern and transmitted by a radio network controller, where the configuration information includes a start time, a burst cycle, and a burst length of the second dedicated physical control channel burst pattern; and acquire control signaling transmitted by the base station, where the control signaling includes first control signaling and second control signaling.

The processing module 802 is configured to determine, according to the scheduling information, a process used for transmitting uplink data, and determine a type of the control signaling; when determining that the receiving module 801 acquires the first control signaling, determine a first dedicated physical control channel burst pattern according to the process for transmitting uplink data; and when determining that the receiving module 801 acquires the second control signaling, determine the second dedicated physical control channel burst pattern according to the configuration information.

The transmitting module 803 is configured to transmit a dedicated physical control channel according to the first dedicated physical control channel burst pattern, or transmit a dedicated physical control channel according to the second dedicated physical control channel burst pattern.

Specific manners in which the processing module 802 determines the first dedicated physical control channel burst pattern according to the process used for transmitting uplink data may include the following manners:
Manner 1: The processing module 802 sets a start time of the first dedicated physical control channel burst pattern to be the same as a start time of a frame or a subframe corresponding to the process used for transmitting uplink data.
Manner 2: The processing module 802 sets a start time of the first dedicated physical control channel burst pattern to differ by a predetermined offset from a start time of a frame or a subframe corresponding to the process used for transmitting uplink data.
Manner 3: The processing module 802 determines whether a start time of the process used for transmitting uplink data is between start times of any two adjacent bursts of the second dedicated physical control channel burst pattern, and if yes, sets a start time of a burst of the first dedicated physical control channel burst pattern to be the same as a start time of a frame or a subframe corresponding to the process used for transmitting uplink data. The processing module 802 sets the start time of the burst of the first dedicated physical control channel burst pattern to be the same as a start time of the former burst in any two adjacent bursts of the second dedicated physical control channel burst pattern when determining that the start time of the process used for transmitting uplink data is not between the start times of any two adjacent bursts of the second dedicated physical control channel burst pattern; or sets the start time of the burst of the first dedicated physical control channel burst pattern to be the same as a start time of the latter burst in any two adjacent bursts of the second dedicated physical control channel burst pattern when determining that the start time of the process used for transmitting uplink data is not between the start times of any two adjacent bursts of the second dedicated physical control channel burst pattern.

In addition, the processing module 803 may further determine whether there is uplink data that needs to be transmitted within a predetermined period of time; and when determining that no uplink data needs to be transmitted within the predetermined period of time, generate the second dedicated physical control channel burst pattern according to the configuration information. The transmitting module 803 is configured to transmit the dedicated physical control channel according to the second dedicated physical control channel burst pattern.

Referring to FIG. 14, FIG. 14 is a schematic diagram of a hardware structure of a discontinuous transmission apparatus based on scheduling according to a ninth embodiment of the present invention. The discontinuous transmission apparatus based on scheduling is configured to perform discontinuous transmission methods based on scheduling in the foregoing embodiments. As shown in FIG. 14, the discontinuous transmission apparatus based on scheduling in the present invention includes a transceiver antenna 901, a transceiver 902, and a baseband signal processing chip 903.

The transceiver antenna 901 is coupled with the transceiver 902, and the transceiver 902 is coupled with the baseband signal processing chip 903.

The transceiver antenna 901 acquires scheduling information transmitted by a base station; the transceiver 902 acquires the scheduling information from the transceiver antenna 901; the baseband signal processing chip 90 acquires the scheduling information from the transceiver 902, determines, according to the scheduling information, a process used for transmitting uplink data, determines a first dedicated physical control channel burst pattern according to the process, and controls, according to the first dedicated physical control channel burst pattern, the transceiver antenna 901 and the transceiver 902 to transmit a dedicated physical control channel.

In another embodiment of the present invention, a transceiver antenna 901 acquires scheduling information transmitted by a base station; acquires configuration information that is of a second dedicated physical control channel burst pattern and transmitted by a radio network controller, where the configuration information includes a start time, a burst cycle, and a burst length of the second dedicated physical control channel burst pattern; and acquires control signaling transmitted by the base station, where the control signaling includes first control signaling and second control signaling. A transceiver 902 acquires the scheduling information, the configuration information, and the control signaling. A baseband signal processing chip 903 acquires the scheduling information, the configuration information, and the control signaling from the transceiver 902, determines, according to the scheduling information, a process used for transmitting uplink data, and determines a type of the control signaling; when acquiring the first control signaling, determines a first dedicated physical control channel burst pattern according to the process for transmitting uplink data, and controls, according to the first dedicated physical control channel burst pattern, the transceiver antenna 901 and the transceiver 902 to transmit a dedicated physical control channel; and when acquiring the second control signaling, determines the second dedicated physical control channel burst pattern according to the configuration information, and controls, according to the second dedicated physical control channel burst pattern, the transceiver antenna 901 and the transceiver 902 to transmit the dedicated physical control channel.

In an embodiment of the present invention, that a baseband signal processing chip 90 determines a first dedicated physical control channel burst pattern according to a process used for transmitting uplink data includes the following three manners:

A start time of the first dedicated physical control channel burst pattern is set to be the same as a start time of a frame or a subframe corresponding to the process used for transmitting uplink data;
a start time of the first dedicated physical control channel burst pattern is set to differ by a predetermined offset from a start time of a frame or a subframe corresponding to the process used for transmitting uplink data;
alternatively, a transceiver antenna 901 acquires configuration information of a second dedicated physical control channel burst pattern from a radio network controller, where the configuration information includes a start time, a burst cycle, and a burst length of the second dedicated physical control channel burst pattern; a transceiver 902 acquires the configuration information from the transceiver antenna 901; the baseband signal processing chip 903 acquires the configuration information from the transceiver 902, determines whether a start time of the process used for transmitting uplink data is between start times of any two adjacent bursts of the second dedicated physical control channel burst pattern, and if yes, sets a start time of a burst of the first dedicated physical control channel burst pattern to be the same as a start time of a frame or a subframe corresponding to the process used for transmitting uplink data; if not, sets the start time of the burst of the first dedicated physical control channel burst pattern to be the same as a start time of the former burst in any two adjacent bursts of the second dedicated physical control channel burst pattern, or sets the start time of the burst of the first dedicated physical control channel burst pattern to be the same as a start time of the latter burst in any two adjacent bursts of the second dedicated physical control channel burst pattern.

In the discontinuous transmission method and apparatus based on scheduling according to the embodiments of the present invention, a first dedicated physical control channel burst pattern is determined according to a process, and a dedicated physical control channel is transmitted according to the first dedicated physical control channel burst pattern. Because transmission of the dedicated physical control channel correlates with transmission of uplink data when the dedicated physical control channel is transmitted, interference of the transmission of the dedicated physical control channel to the uplink data may be effectively reduced.

The foregoing descriptions are merely embodiments of the present invention, and the protection scope of the present invention is not limited thereto. All equivalent structure or process changes made according to the content of this specification and accompanying drawings in the present invention or by directly or indirectly applying the present invention in other related technical fields shall fall within the protection scope of the present invention.

## Claims

1. A discontinuous transmission method based on scheduling, comprising:
acquiring a process that is used for transmitting uplink data and determined according to scheduling;
determining a first dedicated physical control channel burst pattern according to the process used for transmitting uplink data; and
transmitting a dedicated physical control channel according to the first dedicated physical control channel burst pattern.

2. The method according to claim 1, wherein the determining a first dedicated physical control channel burst pattern according to the process used for transmitting uplink data comprises:
setting a start time of a burst of the first dedicated physical control channel burst pattern to be the same as a start time of a frame or a subframe corresponding to the process used for transmitting uplink data.

3. The method according to claim 1, wherein the determining a first dedicated physical control channel burst pattern according to the process used for transmitting uplink data comprises:
setting a start time of a burst of the first dedicated physical control channel burst pattern to differ by a predetermined offset from a start time of a frame or a subframe corresponding to the process used for transmitting uplink data.

4. The method according to claim 1, wherein the determining a first dedicated physical control channel burst pattern according to the process used for transmitting uplink data comprises:
acquiring configuration information of a second dedicated physical control channel burst pattern from a radio network controller, wherein the configuration information comprises a start time, a burst cycle, and a burst length of the second dedicated physical control channel burst pattern; and
if a start time of the process used for transmitting uplink data is between start times of any two adjacent bursts of the second dedicated physical control channel burst pattern, setting a start time of a burst of the first dedicated physical control channel burst pattern to be the same as a start time of a frame or a subframe corresponding to the process used for transmitting uplink data.

5. The method according to claim 4, wherein if the start time of the process used for transmitting uplink data is not between the start times of any two adjacent bursts of the second dedicated physical control channel burst pattern, the start time of the burst of the first dedicated physical control channel burst pattern is set to be the same as a start time of the former burst in any two adjacent bursts of the second dedicated physical control channel burst pattern; or if the start time of the process used for transmitting uplink data is not between the start times of any two adjacent bursts of the second dedicated physical control channel burst pattern, the start time of the burst of the first dedicated physical control channel burst pattern is set to be the same as a start time of the latter burst in any two adjacent bursts of the second dedicated physical control channel burst pattern.

6. The method according to claim 1, wherein the method further comprises:
acquiring configuration information that is of a second dedicated physical control channel burst pattern and transmitted by a radio network controller, wherein the configuration information comprises a start time, a burst cycle, and a burst length of the second dedicated physical control channel burst pattern; and
if no uplink data needs to be transmitted within a predetermined period of time, generating the second dedicated physical control channel burst pattern according to the configuration information, and transmitting the dedicated physical control channel according to the second dedicated physical control channel burst pattern.

7. A discontinuous transmission method based on scheduling, comprising:
acquiring scheduling information transmitted by a base station, and determining, according to the scheduling information, a process used for transmitting uplink data;
acquiring configuration information that is of a second dedicated physical control channel burst pattern and transmitted by a radio network controller, wherein the configuration information comprises a start time, a burst cycle, and a burst length of the second dedicated physical control channel burst pattern;
acquiring control signaling transmitted by the base station, wherein the control signaling comprises first control signaling and second control signaling; and
if the first control signaling is acquired, determining a first dedicated physical control channel burst pattern according to the process used for transmitting uplink data, and transmitting a dedicated physical control channel according to the first dedicated physical control channel burst pattern; or if the second control signaling is acquired, determining the second dedicated physical control channel burst pattern according to the configuration information, and transmitting a dedicated physical control channel according to the second dedicated physical control channel burst pattern.

8. The method according to claim 7, wherein the determining a first dedicated physical control channel burst pattern according to the process used for transmitting uplink data comprises:
setting a start time of a burst of the first dedicated physical control channel burst pattern to be the same as a start time of a frame or a subframe corresponding to the process used for transmitting uplink data.

9. The method according to claim 7, wherein the determining a first dedicated physical control channel burst pattern according to the process used for transmitting uplink data comprises:
setting a start time of a burst of the first dedicated physical control channel burst pattern to differ by a predetermined offset from a start time of a frame or a subframe corresponding to the process used for transmitting uplink data.

10. The method according to claim 7, wherein the determining a first dedicated physical control channel burst pattern according to the process used for transmitting uplink data comprises:
acquiring the configuration information of the second dedicated physical control channel burst pattern from the radio network controller, wherein the configuration information comprises the start time of a burst of the second dedicated physical control channel burst pattern; and
if a start time of the process used for transmitting uplink data is between start times of any two adjacent bursts of the second dedicated physical control channel burst pattern, setting a start time of a burst of the first dedicated physical control channel burst pattern to be the same as a start time of a frame or a subframe corresponding to the process used for transmitting uplink data.

11. The method according to claim 10, wherein if the start time of the process used for transmitting uplink data is not between the start times of any two adjacent bursts of the second dedicated physical control channel burst pattern, the start time of the burst of the first dedicated physical control channel burst pattern is set to be the same as a start time of the former burst in any two adjacent bursts of the second dedicated physical control channel burst pattern; or if the start time of the process used for transmitting uplink data is not between the start times of any two adjacent bursts of the second dedicated physical control channel burst pattern, the start time of the burst of the first dedicated physical control channel burst pattern is set to be the same as a start time of the latter burst in any two adjacent bursts of the second dedicated physical control channel burst pattern.

12. The method according to claim 7, wherein the method further comprises:
if no uplink data needs to be transmitted within a predetermined period of time, generating the second dedicated physical control channel burst pattern according to the configuration information, and transmitting the dedicated physical control channel according to the second dedicated physical control channel burst pattern.

13. A discontinuous transmission apparatus based on scheduling, comprising:
a receiving module, configured to acquire a process that is used for transmitting uplink data and determined according to scheduling;
a processing module, configured to determine a first dedicated physical control channel burst pattern according to the process used for transmitting uplink data; and
a transmitting module, configured to transmit a dedicated physical control channel according to the first dedicated physical control channel burst pattern.

14. The apparatus according to claim 13, wherein the processing module is specifically configured to:
set a start time of a burst of the first dedicated physical control channel burst pattern to be the same as a start time of a frame or a subframe corresponding to the process used for transmitting uplink data.

15. The apparatus according to claim 13, wherein the processing module is specifically configured to:
set a start time of a burst of the first dedicated physical control channel burst pattern to differ by a predetermined offset from a start time of a frame or a subframe corresponding to the process used for transmitting uplink data.

16. The apparatus according to claim 13, wherein the receiving module is further configured to: acquire configuration information of a second dedicated physical control channel burst pattern from a radio network controller, wherein the configuration information comprises a start time, a burst cycle, and a burst length of the second dedicated physical control channel burst pattern; and
the processing module is specifically configured to: determine whether a start time of the process used for transmitting uplink data is between start times of any two adjacent bursts of the second dedicated physical control channel burst pattern, and if yes, set a start time of a burst of the first dedicated physical control channel burst pattern to be the same as a start time of a frame or a subframe corresponding to the process used for transmitting uplink data.

17. The apparatus according to claim 16, wherein the processing module is further configured to: set the start time of the burst of the first dedicated physical control channel burst pattern to be the same as the start time of the former burst in any two adjacent bursts of the second dedicated physical control channel burst pattern when determining that the start time of the process used for transmitting uplink data is not between the start times of any two adjacent bursts of the second dedicated physical control channel burst pattern; or set the start time of the burst of the first dedicated physical control channel burst pattern to be the same as a start time of the latter burst in any two adjacent bursts of the second dedicated physical control channel burst pattern when determining that the start time of the process used for transmitting uplink data is not between the start times of any two adjacent bursts of the second dedicated physical control channel burst pattern.

18. The apparatus according to claim 13, wherein the processing module is configured to determine whether there is uplink data that needs to be transmitted within a predetermined period of time; and when determining that no uplink data needs to be transmitted within the predetermined period of time, generate a second dedicated physical control channel burst pattern according to the configuration information; and
the transmitting module is configured to transmit the dedicated physical control channel according to the second dedicated physical control channel burst pattern.

19. A discontinuous transmission apparatus based on scheduling, comprising:
a receiving module, configured to acquire scheduling information transmitted by a base station; acquire configuration information that is of a second dedicated physical control channel burst pattern and transmitted by a radio network controller, wherein the configuration information comprises a start time, a burst cycle, and a burst length of the second dedicated physical control channel burst pattern; and acquire control signaling transmitted by the base station, wherein the control signaling comprises first control signaling and second control signaling;
a processing module, configured to determine, according to the scheduling information, a process used for transmitting uplink data; when the receiving module acquires the first control signaling, determine a first dedicated physical control channel burst pattern according to the process used for transmitting uplink data; and when the receiving module acquires the second control signaling, determine the second dedicated physical control channel burst pattern according to the configuration information; and
a transmitting module, configured to transmit a dedicated physical control channel according to the first dedicated physical control channel burst pattern, or transmit a dedicated physical control channel according to the second dedicated physical control channel burst pattern.

20. The apparatus according to claim 19, wherein the processing module is configured to:
set a start time of a burst of the first dedicated physical control channel burst pattern to be the same as a start time of a frame or a subframe corresponding to the process used for transmitting uplink data.

21. The apparatus according to claim 19, wherein the processing module is configured to:
set a start time of a burst of the first dedicated physical control channel burst pattern to differ by a predetermined offset from a start time of a frame or a subframe corresponding to the process used for transmitting uplink data.

22. The apparatus according to claim 19, wherein the processing module is configured to:
determine whether a start time of the process used for transmitting uplink data is between start times of any two adjacent bursts of the second dedicated physical control channel burst pattern, and if yes, set a start time of a burst of the first dedicated physical control channel burst pattern to be the same as a start time of a frame or a subframe corresponding to the process used for transmitting uplink data.

23. The apparatus according to claim 22, wherein the processing module is configured to: set the start time of the burst of the first dedicated physical control channel burst pattern to be the same as a start time of the former burst in any two adjacent bursts of the second dedicated physical control channel burst pattern when determining that the start time of the process used for transmitting uplink data is not between the start times of any two adjacent bursts of the second dedicated physical control channel burst pattern; or set the start time of the burst of the first dedicated physical control channel burst pattern to be the same as a start time of the latter burst in any two adjacent bursts of the second dedicated physical control channel burst pattern when determining that the start time of the process used for transmitting uplink data is not between the start times of any two adjacent bursts of the second dedicated physical control channel burst pattern.

24. The apparatus according to claim 19, wherein the processing module is configured to:
determine whether there is uplink data that needs to be transmitted within a predetermined period of time, and if it is determined that no uplink data needs to be transmitted within the predetermined period of time, generate the second dedicated physical control channel burst pattern according to the configuration information; and
the transmitting module is configured to transmit the dedicated physical control channel according to the second dedicated physical control channel burst pattern.

25. A discontinuous transmission apparatus based on scheduling, comprising a transceiver antenna, a transceiver, and a baseband signal processing chip, wherein the transceiver antenna is coupled with the transceiver, and the transceiver is coupled with the baseband signal processing chip;
the transceiver antenna acquires scheduling information transmitted by a base station;
the transceiver acquires the scheduling information from the transceiver antenna;
the baseband signal processing chip acquires the scheduling information from the transceiver, determines, according to the scheduling information, a process used for transmitting uplink data, and determines a first dedicated physical control channel burst pattern according to the process; and
the baseband signal processing chip controls, according to the first dedicated physical control channel burst pattern, the transceiver and the transceiver antenna to transmit a dedicated physical control channel.

26. The apparatus according to claim 25, wherein the baseband signal processing chip is configured to:
set a start time of a burst of the first dedicated physical control channel burst pattern to be the same as a start time of a frame or a subframe corresponding to the process used for transmitting uplink data.

27. The apparatus according to claim 25, wherein the baseband signal processing chip is configured to:
set a start time of a burst of the first dedicated physical control channel burst pattern to differ by a predetermined offset from a start time of a frame or a subframe corresponding to the process used for transmitting uplink data.

28. The apparatus according to claim 25, wherein the transceiver antenna further acquires configuration information of a second dedicated physical control channel burst pattern from a radio network controller, wherein the configuration information comprises a start time, a burst cycle, and a burst length of the second dedicated physical control channel burst pattern; and the transceiver module acquires the configuration information from the transceiver antenna; and
the baseband signal processing chip acquires the configuration information from the transceiver, and determines whether a start time of the process used for transmitting uplink data is between start times of any two adjacent bursts of the second dedicated physical control channel burst pattern, and if yes, sets a start time of a burst of the first dedicated physical control channel burst pattern to be the same as a start time of a frame or a subframe corresponding to the process used for transmitting uplink data.

29. The apparatus according to claim 28, wherein the baseband signal processing chip further sets the burst of the first dedicated physical control channel burst pattern to be the same as the former burst in any two adjacent bursts of the second dedicated physical control channel burst pattern when determining that the start time of the process used for transmitting uplink data is not between the start times of any two adjacent bursts of the second dedicated physical control channel burst pattern; or sets the start time of the burst of the first dedicated physical control channel burst pattern to be the same as a start time of the latter burst in any two adjacent bursts of the second dedicated physical control channel burst pattern when determining that the start time of the process used for transmitting uplink data is not between the start times of any two adjacent bursts of the second dedicated physical control channel burst pattern.

30. The apparatus according to claim 25, wherein the baseband signal processing chip determines whether there is uplink data that needs to be transmitted within a predetermined period of time; and when determining that no uplink data needs to be transmitted within the predetermined period of time, generates a second dedicated physical control channel burst pattern according to the configuration information; and controls, according to the second dedicated physical control channel burst pattern, the transceiver and the transceiver antenna to transmit the dedicated physical control channel.

31. A discontinuous transmission apparatus based on scheduling, comprising a transceiver antenna, a transceiver, and a baseband signal processing chip, wherein the transceiver antenna is coupled with the transceiver, and the transceiver is coupled with the baseband signal processing chip;
the transceiver antenna acquires scheduling information transmitted by a base station; acquires configuration information that is of a second dedicated physical control channel burst pattern and transmitted by a radio network controller, wherein the configuration information comprises a start time, a burst cycle, and a burst length of the second dedicated physical control channel burst pattern; acquires control signaling transmitted by the base station, wherein the control signaling comprises first control signaling and second control signaling; and the transceiver acquires the scheduling information, the configuration information, and the control signaling from the transceiver antenna;
the baseband signal processing chip acquires the scheduling information, the configuration information, and the control signaling from the transceiver; determines, according to the scheduling information, a process used for transmitting uplink data; when acquiring the first control signaling, determines a first dedicated physical control channel burst pattern according to the process used for transmitting uplink data; and when acquiring the second control signaling, determines the second dedicated physical control channel burst pattern according to the configuration information; and
the baseband signal processing chip controls, according to the first dedicated physical control channel burst pattern, the transceiver and the transceiver antenna to transmit a dedicated physical control channel; or controls, according to the second dedicated physical control channel burst pattern, the transceiver and the transceiver antenna to transmit a dedicated physical control channel.

32. The apparatus according to claim 31, wherein the baseband signal processing chip is configured to:
set a start time of a burst of the first dedicated physical control channel burst pattern to be the same as a start time of a frame or a subframe corresponding to the process used for transmitting uplink data.

33. The apparatus according to claim 31, wherein the baseband signal processing chip is configured to:
set a start time of a burst of the first dedicated physical control channel burst pattern to differ by a predetermined offset from a start time of a frame or a subframe corresponding to the process used for transmitting uplink data.

34. The apparatus according to claim 31, wherein the baseband signal processing chip is configured to:
determine whether a start time of the process used for transmitting uplink data is between start times of any two adjacent bursts of the second dedicated physical control channel burst pattern, and if yes, set a start time of a burst of the first dedicated physical control channel burst pattern to be the same as a start time of a frame or a subframe corresponding to the process used for transmitting uplink data.

35. The apparatus according to claim 22, wherein the baseband signal processing chip sets the start time of the burst of the first dedicated physical control channel burst pattern to be the same as a start time of the former burst in any two adjacent bursts of the second dedicated physical control channel burst pattern when determining that the start time of the process used for transmitting uplink data is not between the start times of any two adjacent bursts of the second dedicated physical control channel burst pattern; or sets the start time of the burst of the first dedicated physical control channel burst pattern to be the same as a start time of the latter burst in any two adjacent bursts of the second dedicated physical control channel burst pattern when determining that the start time of the process used for transmitting uplink data is not between the start times of any two adjacent bursts of the second dedicated physical control channel burst pattern.

36. The apparatus according to claim 19, wherein the baseband signal processing chip is configured to:
determine whether there is uplink data that needs to be transmitted within a predetermined period of time, and if it is determined that no uplink data needs to be transmitted within the predetermined period of time, generate the second dedicated physical control channel burst pattern according to the configuration information; and
control, according to the second dedicated physical control channel burst pattern, the transceiver and the transceiver antenna to transmit the dedicated physical control channel.
